# FASCICULE DE BREVET EUROPEEN

(11) **EP 0 589 936 B1**
(45) Date de publication et mention de la délivrance du brevet: **23.04.1997**
(21) Numéro de dépôt: 92911634.1
(22) Date de dépôt: 03.06.1992
(51) Int. Cl.: G01N 27/447, B01D 57/02

(54) **DISPOSITIF D'ELECTROPHORESE**
Elektrophoresegerät
ELECTROPHORESIS DEVICE

(30) Priorité: 20.06.1991 FR 9107586
(43) Date de publication de la demande: 06.04.1994
(73) Titulaire: BIOPROBE SYSTEMS, F-75012 Paris (FR)
(72) Inventeur: LEBACQ, Philippe, F-75012 Paris (FR)
(74) Mandataire: Plaçais, Jean-Yves
(86) Numéro de dépôt international: FR9200491
(87) Numéro de publication internationale: WO9300583

(56) Documents cités:
- WO-A-86/00708
- DE-A- 2 234 000
- DE-A- 3 703 687
- GB-A- 1 021 287
- US-A- 3 980 540
- US-A- 4 035 377
- US-A- 4 142 960
- US-A- 4 339 327

## Description

L'invention concerne un dispositif d'électrophorèse.

L'électrophorèse est une technique utilisée pour l'analyse et la séparation de molécules de tailles et de natures chimiques diverses, telles que des acides nucléiques, des acides aminés, des protéines, etc.

Cette technique est fondée sur le fait que, sous l'action d'un champ électrique, de telles molécules migrent à des vitesses différentes au sein d'un milieu-support, en fonction de leur densité de charge et de leur taille.

L'électrophorèse est pratiquée généralement sur un support solide tel qu'un gel, par exemple de polyacrylamide ou d'agarose, au sein duquel les molécules à analyser ou à séparer vont migrer à des vitesses différentes.

Après un temps de migration donné, pendant lequel les molécules sont soumises à l'action d'un champ électrique, celles-ci se sont déplacées dans le support d'une distance donnée qui est proportionnelle à leur vitesse de migration et qui est donc en corrélation avec leur densité de charge et leur taille.

En utilisant un colorant approprié on peut visualiser directement, sous forme de bandes, les zones atteintes par les différents types de molécules au bout d'un temps donné.

L'électrophorèse n'a pu jusqu'à présent être véritablement automatisée en raison notamment de la difficulté de préparation des supports nécessaires à la mise en oeuvre de cette méthode.

On connaît déjà des gels en polyacrylamide qui sont pré-coulés sur une plaque-support en matière plastique. Toutefois, ces supports ne conviennent qu'à l'électrophorèse dite "horizontale", dans laquelle les plaques sont disposées horizontalement.

Pour l'électrophorèse dite "verticale", dans laquelle les plaques-supports sont disposées verticalement, on utilise généralement deux plaques de verre et deux intercalaires en verre que l'on graisse puis assemble en les maintenant ensemble par des moyens appropriés, tels qu'un ruban adhésif.

Ensuite, on place un peigne à l'une des extrémités du support ainsi obtenu et on coule un gel dans l'espace ménagé entre les deux plaques de verre.

La fabrication de ces plaques-supports nécessite un nombre élevé de manipulations qui n'est pas compatible avec une automatisation de la technique d'électrophorèse.

L'invention a notamment pour but de surmonter les inconvénients mentionnés précédemment.

C'est, en particulier, un but de l'invention de procurer un dispositif d'électrophorèse fournissant tous les moyens nécessaires à la mise en oeuvre d'une technique d'électrophorèse de façon automatisée.

Un dispositif d'électrophorèse comprenant une cassette monobloc remplie d'un gel approprié est divulgué dans le document WO-A-8600708. Le dispositif selon l'invention se distingue de cet art antérieur en ce que le gel est éventuellement coloré, et en ce que ladite cassette est obtenue à partir d'un tronçon de profilé creux possédant deux faces ouvertes opposées dont l'une est obturée par un peigne amovible propre à former des empreintes dans le gel et l'autre par un opercule détachable.

On obtient ainsi un support qui peut être fabriqué en grande série, donc à bon marché et qui peut être livré prêt à l'emploi à l'utilisateur.

De façon avantageuse, cette cassette a la forme générale d'un parallélépipède rectangle limité par deux grandes faces parallèles et opposées, disposées proches l'une de l'autre, et réunies entre elles par deux petites faces parallèles et opposées.

Selon une autre caractéristique de l'invention, cette cassette comporte une découpe latérale débouchant sur la face ouverte recevant le peigne amovible, cette découpe latérale étant également obturée par le peigne lorsque celui-ci est placé sur la face ouverte précitée.

Ainsi, lorsque le peigne a été enlevé de la cassette, la découpe latérale de celle-ci est découverte pour permettre, comme on le verra plus loin, un contact électrique avec le gel à l'extrémité correspondante de la cassette.

Un autre contact électrique peut être assuré à l'autre extrémité de la cassette, après enlèvement de l'opercule détachable.

Cet opercule est avantageusement scellé aux ultrasons sur la face ouverte correspondante de la cassette.

Cette dernière est obtenue avantageusement à partir d'un profilé extrudé en une matière plastique transparente aux ultraviolets.

Selon une autre caractéristique de l'invention, le dispositif comprend en outre deux cuves propres à contenir chacune un tampon conducteur et contenant respectivement deux électrodes propres à être alimentées par une source de courant continu, les deux cuves possédant des ouvertures respectives pour les deux faces ouvertes de la cassette afin d'assurer un contact entre le gel et le tampon correspondant de chaque cuve.

Bien que l'invention puisse s'appliquer aussi bien à une électrophorèse horizontale qu'à une électrophorèse verticale, elle s'applique de préférence à une électrophorèse verticale.

Dans ce cas, le dispositif comprend une cuve inférieure et une cuve supérieure superposées verticalement pour loger la cassette en position verticale, une extrémité de la cassette plongeant dans la cuve inférieure et l'autre extrémité de la cassette communiquant latéralement avec la cuve supérieure.

Avantageusement, la cuve supérieure comporte une paroi verticale dans laquelle est formée une ouverture latérale pour assurer la mise en contact du tampon avec le gel de la cassette au travers d'une découpe latérale de la cassette, un joint d'étanchéité étant prévu sur ladite paroi verticale, à proximité de son ouverture latérale.

Selon une autre caractéristique de l'invention, la cuve inférieure et la cuve supérieure sont séparables et il est prévu en outre un couvercle séparable susceptible d'être rapporté sur la cuve supérieure.

Cette caractéristique a notamment pour avantage de faciliter le nettoyage du dispositif.

De façon avantageuse, la cuve supérieure comprend deux liaisons électriques à contact propres à assurer l'alimentation électrique des deux électrodes lorsque, à la fois, le couvercle est emboîté sur la cuve supérieure et cette dernière est emboîtée sur la cuve inférieure.

Cette caractéristique est particulièrement avantageuse pour la sécurité de l'utilisateur, compte tenu des tensions électriques élevées appliquées aux électrodes.

Avantageusement, la paroi de fond de la cuve supérieure comprend un conduit de trop-plein permettant de remplir la cuve inférieure lorsque le niveau de tampon dans la cuve supérieure déborde dans ce conduit.

De préférence, le dispositif comprend en outre des moyens de serrage pour assurer le maintien de la cassette en position verticale, ces moyens de serrage étant par exemple prévus sur la cuve supérieure.

Avantageusement, le dispositif comprend en outre un programmateur interposé entre les électrodes et la source de tension pour régler à volonté le temps de l'électrophorèse.

Le dispositif comprend avantageusement en outre une dose de tampon concentrée permettant, après dilution, de remplir les deux cuves au niveau voulu.

Dans la description qui suit, donnée seulement à titre d'exemple, on se réfère aux dessins annexés, sur lesquels :
- la figure 1 est une vue en perspective éclatée d'une cassette faisant partie du dispositif de l'invention ;
- la figure 2 est une vue de dessous du peigne de la cassette de la figure 1 ;
- la figure 3 est une vue en coupe suivant la ligne III-III de la figure 2 ;
- la figure 4 est une vue en coupe suivant la ligne IV-IV de la figure 3 ;
- la figure 5 est une vue en perspective éclatée du dispositif de l'invention, la cuve inférieure, la cuve supérieure et le couvercle étant séparés ;
- la figure 6 est une vue en coupe verticale du dispositif de la figure 5, la cuve inférieure, la cuve supérieure et le couvercle étant rapprochés ; et
- la figure 7 est une vue en perspective d'un récipient contenant une dose de tampon concentrée.

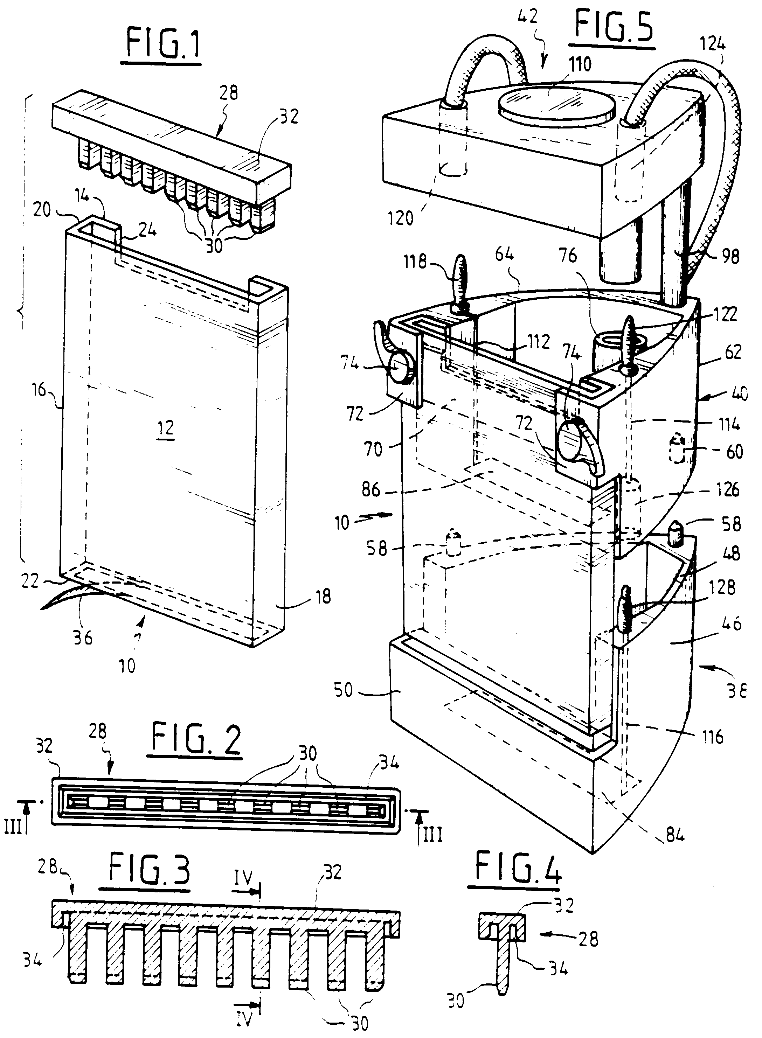

On se réfère tout d'abord à la figure 1 qui montre une cassette 10 réalisée d'une seule pièce à partir d'un profilé extrudé en une matière plastique transparente aux ultraviolets.

La cassette 10 a la forme générale d'un parallélépipède rectangle limité par deux grandes faces parallèles et opposées 12 et 14, disposées proches l'une de l'autre, et réunies entre elles par deux petites faces parallèles et opposées 16 et 18. La cassette 10 possède deux faces ouvertes opposées : une face ouverte supérieure 20 et une face ouverte inférieure 22, toutes deux à contour général rectangulaire.

Du côté de la face ouverte 20, la face 14 de la cassette 10 comporte une découpe latérale 24, de forme générale rectangulaire, qui s'étend sur presque toute la largeur de la cassette et qui débouche sur la face ouverte 20.

A titre d'exemple, la cassette 10 peut avoir une hauteur d'environ 100 mm, une largeur d'environ 70 mm et un intervalle interne d'environ 2 mm entre les faces 12 et 14 en vis-à-vis. La découpe latérale 24 peut avoir une largeur d'environ 60 mm pour une hauteur généralement inférieure à 10 mm.

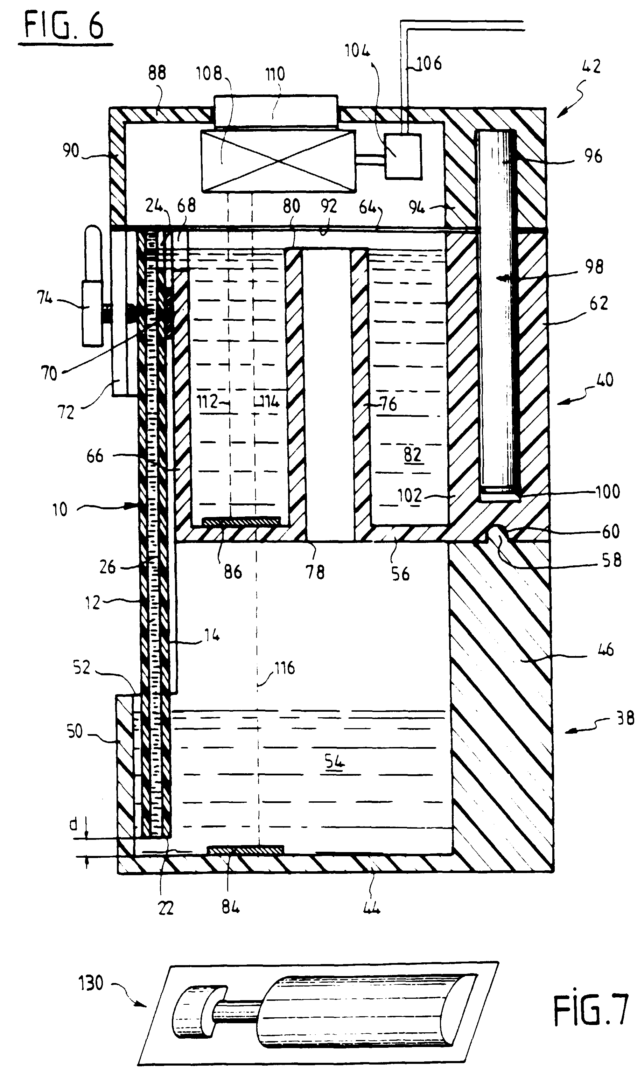

La cassette 10 est destinée à contenir un gel 26 (figure 6) tel qu'un gel de polyacrylamide ou un gel d'agarose, par exemple. Ce gel est éventuellement coloré au moyen d'un colorant approprié, par exemple du bromure d'éthidium.

La face ouverte 20 peut être obturée par un peigne 28 possédant une multiplicité de dents 30 propres à former des empreintes (non représentées) dans le gel 26 lorsque le peigne 28 est mis en place sur la face ouverte 20.

Le peigne 28 (figures 2 à 4) comprend une embase 32 en forme de parallélépipède rectangle allongé dont dépendent les dents 30. L'embase 32 ménage, sur son pourtour, une rainure 34 de forme adaptée à celle du contour de la face ouverte 20 de la cassette. Lorsque le peigne 28 est mis en place sur la face ouverte 20, il obture en même temps la découpe latérale 24.

La face ouverte 22 est obturée par un opercule détachable 36 constitué, par exemple, par une mince feuille d'aluminium enduite d'un revêtement en matière plastique susceptible d'être scellé aux ultrasons sur la face ouverte 22 de la cassette.

La cassette 10 est obtenue à partir d'un profilé extrudé formé en une matière plastique transparente aux ultraviolets. En usine, la cassette 10 est munie de son peigne 28 et elle est ensuite disposée verticalement avec son peigne vers le bas pour permettre la coulée du gel 26 jusqu'au niveau de la face ouverte 22 placée en position supérieure. Le peigne 28 forme ainsi un certain nombre d'empreintes dans le gel. Après coulée du gel, la cassette est munie de son opercule 36 et peut être ainsi expédiée à l'utilisateur.

Pour effectuer une électrophorèse, l'utilisateur adapte la cassette 10, après en avoir enlevé le peigne 28 et l'opercule 36, sur un dispositif approprié, tel que celui représenté aux figures 5 et 6.

Ce dernier comprend une cuve inférieure 38 et une cuve supérieure 40 superposées verticalement pour loger une cassette 10 en position verticale, la face ouverte 22 étant orientée vers le bas, ainsi qu'un couvercle 42 propre à s'emboîter sur le dessus de la cuve supérieure 40. Les cuves 38 et 40 sont avantageusement formées à partir d'une matière plastique transparente.

La cuve inférieure 38 est délimitée par une paroi de fond 44 surmontée par une paroi latérale 46 offrant un rebord supérieur horizontal 48 à configuration générale en U, et par une face avant 50 rattachée à la paroi 46. La face avant 50 s'étend sur une hauteur inférieure à celle de la paroi latérale 46 et ménage une ouverture horizontale 52 de forme générale rectangulaire adaptée à la section de la cassette 10.

La cuve inférieure 38 est propre à contenir un tampon électroconducteur 54, la hauteur de remplissage du tampon étant inférieure à la hauteur de la paroi 50.

On comprendra que l'extrémité de la cassette 10, située du côté de sa face ouverte 22, peut plonger dans le tampon 54 pour que celui-ci vienne en contact avec le gel 26 du côté de la face ouverte 22. Pour cela, il est indispensable que cette face ouverte se situe à une distance d (figure 6) de la paroi de fond 44.

La cuve supérieure 40 comprend une paroi de fond 56 propre à venir reposer sur le rebord supérieur 48 de la cuve 38 et à s'assembler sur ce rebord à l'aide d'au moins un plot 58 formé en saillie sur le rebord 48 et propre à s'emboîter dans un logement correspondant 60 ménagé dans la paroi de fond 56.

La cuve 40 est en outre limitée par une paroi latérale 62 présentant un rebord supérieur horizontal 64 à configuration en forme de U. La cuve 40 est en outre limitée par une paroi avant verticale 66, contre laquelle vient s'appliquer la face 14 de la cassette 10 en position verticale. Pour cette raison, la face avant 26 n'est pas superposée verticalement avec la face avant 50 de la cuve 38.

La paroi verticale 66 délimite, à sa partie supérieure, une ouverture latérale 68 qui se trouve en vis-à-vis de la découpe latérale 24 de la cassette 10 (figure 6).

La paroi antérieure 66 est munie d'un joint d'étanchéité 70 destiné à assurer l'étanchéité avec la face 14 de la cassette 10, autour et au-dessous de l'ouverture latérale 68.

La cuve 40 comprend en outre deux pattes repliées 72 qui se rattachent à la paroi 62 et qui sont munies chacune d'un organe de serrage 74 propre à assurer le serrage de la partie supérieure de la cassette 10 en direction de la paroi 66 et, par conséquent, la compression du joint d'étanchéité 70.

Les organes de serrage 74 assurent aussi le maintien de la cassette dans une position telle que sa face ouverte inférieure 22 se trouve à distance du fond 44. Si nécessaire, on pourrait prévoir des cales (non représentées) sur la paroi de fond 44 pour ménager la distance d.

La cuve 40 comporte en outre un conduit de trop-plein 76 dont l'extrémité inférieure 78 est rattachée à la paroi de fond 56 et dont l'extrémité supérieure 80 débouche à distance du rebord 64. Toutefois cette distance est inférieure à la hauteur de l'ouverture latérale 68.

La cuve supérieure 40 est destinée à contenir un tampon 82 identique au tampon 54 de la cuve 38.

Pour assurer le remplissage des deux cuves, on verse une quantité convenable de tampon dans la cuve supérieure 40 de manière que le niveau de tampon 82 atteigne l'extrémité supérieure 80 du conduit 76 et déborde ensuite dans la cuve inférieure 38.

On comprendra que le tampon 82 vient en contact avec le gel 26 au travers de l'ouverture latérale 68 de la cuve 40 et au travers de la découpe latérale 24 de la cassette 10.

Les cuves 38 et 40 contiennent respectivement une électrode 84 (dans l'exemple une anode) et une électrode 86 (dans l'exemple une cathode), propres à être reliées à une source de tension appropriée.

Le couvercle 42 comprend une paroi supérieure 88 dont dépend une paroi latérale 90 à contour fermé possédant un rebord inférieur 92 propre à reposer sur le rebord supérieur 64 de la cuve 40.

Dans une surépaisseur 94 de la paroi 90 est encastrée l'extrémité 96 d'une colonne verticale 98 propre à coulisser et pivoter dans un logement cylindrique 100 d'axe vertical ménagé dans une surépaisseur 102 de la paroi 62 de la cuve 40.

Le couvercle 42 peut ainsi être écarté ou rapproché de la cuve 40 pour permettre notamment le remplissage des cuves 38 et 40.

Le couvercle 42 loge un redresseur de courant 104 propre à être relié au secteur par un cordon d'alimentation 106. Le redresseur 104 fournit une tension continue réglable, par exemple jusqu'à 2000 V, cette tension étant ensuite appliquée aux électrodes 84 et 86 au travers d'un programmateur 108. Celui-ci est commandé par un bouton rotatif 110 faisant saillie au-dessus du couvercle.

L'électrode 86 est alimentée au travers d'une liaison électrique 112 s'étendant sur toute la hauteur de la cuve 40, tandis que l'électrode 84 est alimentée par une liaison électrique 114 s'étendant sur toute la hauteur de la cuve 40 et une liaison électrique 116 s'étendant sur toute la hauteur de la cuve 38.

Comme montré plus particulièrement à la figure 5, la liaison 112 se termine, en partie supérieure, par une fiche mâle 118 propre à coopérer avec une fiche femelle 120 logée dans le couvercle 42, lorsque ce dernier est emboîté sur la cuve 40.

La liaison 114 est terminée, en partie supérieure, par une fiche mâle 122 propre à coopérer avec une fiche femelle 124 logée dans le couvercle 42. La liaison 114 se termine, en partie inférieure, par une fiche femelle 126 propre à coopérer avec une fiche mâle 128 qui est montée à l'extrémité supérieure de la liaison 116.

Ainsi, lorsque les deux cuves 38 et 40 sont emboîtées et que le couvercle 42 est assemblé, la liaison électrique est assurée avec les électrodes 84 et 86.

La figure 7 représente un récipient 130 par exemple du type "blister" contenant une dose concentrée de tampon qui, après dilution appropriée, permet de remplir les deux cuves au niveau voulu.

Le dispositif de l'invention s'utilise de la manière suivante : l'utilisateur enlève tout d'abord le peigne 28 et l'opercule 36 de la cassette 10 et il met ensuite en place le ou les échantillon(s) à analyser dans les logements formés dans le gel 26.

Ensuite, il met en place la cassette en position verticale en la maintenant fermement par les éléments de serrage 74, une distance d étant ménagée entre la face ouverte 22 de la cassette et le fond 44 de la cuve 38 (figure 6).

Ensuite, on applique une tension continue entre les deux électrodes en réglant la valeur de la tension et en réglant le temps de l'opération au moyen du programmateur 108.

Les molécules à charge négative se déplacent verticalement de la cathode vers l'anode, c'est-à-dire du haut vers le bas. Au bout d'un temps d'électrophorèse donné, les zones où se situent les molécules ayant migré sont visualisées par des bandes colorées.

Bien que l'invention ait été décrite en référence particulière à un dispositif dans lequel la cassette est en position verticale, elle s'applique aussi à une électrophorèse en position horizontale.

De même, l'invention n'est pas limitée à une électrophorèse mono-dimensionnelle. Elle pourrait être aussi appliquée à une électrophorèse bi-dimensionnelle, la cassette étant tournée de 90o entre deux opérations successives. En ce cas, il faudrait prévoir des ouvertures au travers des deux petites faces 16 et 18 de cette dernière.

L'invention peut être utilisée pour la séparation et l'analyse de molécules de diverses natures, telles que des acides nucléiques, des acides aminés, des protéines, etc.

## Revendications

1. Dispositif d'électrophorèse comprenant une cassette monobloc (10) remplie d'un gel approprié (26), caractérisé en ce que le gel est éventuellement coloré, et en ce que ladite cassette monobloc (10) est obtenue à partir d'un tronçon de profilé creux possédant deux faces ouvertes opposées (20,22) dont l'une est obturée par un peigne amovible (28) propre à former des empreintes dans le gel (26) et l'autre par un opercule détachable (36).

2. Dispositif selon la revendication 1, caractérisé en ce que la cassette (10) a la forme générale d'un parallélépipède rectangle limité par deux grandes faces parallèles et opposées (12,14), disposées proches l'une de l'autre, et réunies entre elles par deux petites faces parallèles et opposées (16,18).

3. Dispositif selon l'une des revendications 1 et 2, caractérisé en ce que la cassette (10) comporte une découpe latérale (24) débouchant sur la face ouverte (20) recevant le peigne amovible (28), ladite découpe latérale étant obturée par le peigne (28) lorsque ce dernier est placé sur la face ouverte précitée.

4. Dispositif selon l'une des revendications 1 à 3, caractérisé en ce que la cassette (10) est obtenue à partir d'un profilé extrudé en une matière plastique transparente aux ultraviolets.

5. Dispositif selon l'une des revendications 1 à 4, caractérisé en ce que l'opercule (36) est scellé aux ultrasons sur la face ouverte correspondante (22) de la cassette (10).

6. Dispositif selon l'une des revendications 1 à 5, caractérisé en ce qu'il comprend en outre deux cuves (38,40) propres à contenir chacune un tampon conducteur (54,82) et contenant respectivement deux électrodes (84,86) propres à être alimentées par une source de courant continu, les deux cuves possédant des ouvertures respectives (52,68) pour les deux faces ouvertes de la cassette (10) afin d'assurer un contact entre le gel (26) et le tampon correspondant (54,82) de chaque cuve.

7. Dispositif selon la revendication 6, caractérisé en ce que les deux cuves comprennent une cuve inférieure (38) et une cuve supérieure (40) superposées verticalement pour loger la cassette (10) en position verticale, une extrémité de la cassette plongeant dans la cuve inférieure (38) et l'autre extrémité de la cassette communiquant latéralement avec la cuve supérieure (40).

8. Dispositif selon la revendication 7, caractérisé en ce que la cuve supérieure (40) comporte une paroi verticale (66) dans laquelle est formée une ouverture latérale (68) propre à assurer la mise en contact du tampon (82) avec le gel (26) de la cassette au travers d'une découpe latérale (24) de la cassette, un joint d'étanchéité (70) étant prévu sur la paroi verticale (66), près de son ouverture latérale (68).

9. Dispositif selon l'une des revendications 7 et 8, caractérisé en ce que la cuve inférieure (38) et la cuve supérieure (40) sont séparables et en ce qu'il est prévu en outre un couvercle séparable (42) susceptible d'être rapporté sur la cuve supérieure (40).

10. Dispositif selon la revendication 9, caractérisé en ce que la cuve supérieure (40) comprend deux liaisons électriques à contacts (112, 114) propres à assurer l'alimentation électrique des deux électrodes (84,86) lorsque, à la fois, le couvercle (42) est emboîté sur la cuve supérieure (40) et cette dernière est emboîtée sur la cuve inférieure (38).

11. Dispositif selon l'une des revendications 7 à 10, caractérisé en ce que la cuve supérieure (40) comprend une paroi de fond (56) dont dépend un conduit de trop-plein (76) pour permettre de remplir la cuve inférieure (38) lorsque le niveau de tampon dans la cuve supérieure déborde dans le conduit de trop-plein.

12. Dispositif selon l'une des revendications 7 à 11, caractérisé en ce qu'il comprend des moyens de serrage (74) pour assurer le maintien de la cassette (10) en position verticale.

13. Dispositif selon l'une des revendications 7 à 12, caractérisé en ce qu'il comprend un programmateur (108) interposé entre les électrodes (84,86) et la source de tension pour régler à volonté le temps d'électrophorèse.

14. Dispositif selon l'une des revendications 7 à 13, caractérisé en ce qu'il comprend en outre un récipient (130) contenant une dose de tampon concentrée permettant, après dilution, de remplir les deux cuves (38,40).

## Patentansprüche

1. Elektrophoresevorrichtung mit einer einstückigen Kassette (10), die mit einem geeigneten Gel (26) gefüllt ist,
dadurch **gekennzeichnet**,
daß das Gel gegebenenfalls gefärbt ist und daß die einstückige Kassette ausgehend von einem Hohlprofilstück erhalten ist, das zwei entgegengesetzte offene Flächen (20, 22) besitzt, von denen eine durch einen abnehmbaren Kamm (28), der dazu geeignet ist, Abdrücke im Gel (26) zu formen, und die andere durch einen abnehmbaren Deckel (36) verschlossen ist.

2. Vorrichtung nach Anspruch 1,
dadurch gekennzeichnet, daß die Kassette (10) die allgemeine Form eines rechtwinkligen Parallelepipeds aufweist, das durch zwei große parallele und entgegengesetzte Flächen (12, 14) begrenzt ist, die nahe zueinander angeordnet und untereinander durch zwei kleine parallele und entgegengesetzte Flächen (16, 18) verbunden sind.

3. Vorrichtung nach Anspruch 1 oder 2,
dadurch gekennzeichnet, daß die Kassette (10) einen seitlichen Ausschnitt (24) aufweist, der in die offene Fläche (20) mündet, die den abnehmbaren Kamm (28) aufnimmt, wobei der seitliche Ausschnitt durch den Kamm (28) verschlossen wird, wenn letztgenannter an der vorgenannten offenen Fläche angeordnet ist.

4. Vorrichtung nach einem der Ansprüche 1 bis 3,
dadurch gekennzeichnet, daß die Kassette (10) ausgehend von einem Profil erhalten ist, das aus einem für Ultraviolettstrahlen transparenten Kunststoff extrudiert ist.

5. Vorrichtung nach einem der Ansprüche 1 bis 4,
dadurch gekennzeichnet, daß der Deckel (36) an der offenen entsprechenden Fläche (22) der Kassette (10) mit Ultraschall verschlossen ist.

6. Vorrichtung nach einem der Ansprüche 1 bis 5,
dadurch gekennzeichnet, daß sie ferner zwei Küvetten (38, 40) aufweist, die dazu geeignet sind, jeweils eine leitende Pufferlösung (54, 82) aufzunehmen und welche zwei Küvetten jeweils zwei Elektroden (84, 86) aufnehmen, die geeignet sind, durch eine Gleichstromquelle gespeist zu werden, wobei die beiden Küvetten entsprechende Öffnungen (52, 68) für die beiden offenen Flächen der Kassette (10) besitzen, um einen Kontakt zwischen dem Gel (26) und der entsprechenden Pufferlösung (54, 82) jeder Küvette zu gewährleisten.

7. Vorrichtung nach Anspruch 6,
dadurch gekennzeichnet, daß die beiden Küvetten eine untere Küvette (38) und eine obere Küvette (40) umfassen, die vertikal übereinander angeordnet sind, um die Kassette (10) in vertikaler Position unterzubringen, wobei ein Ende der Kassette in der unteren Küvette (38) eingesenkt ist und das andere Ende der Kassette seitlich mit der oberen Küvette (40) verbunden ist.

8. Vorrichtung nach Anspruch 7,
dadurch gekennzeichnet, daß die obere Küvette (40) eine vertikale Wand (66) aufweist, in der eine seitliche Öffnung (68) gebildet ist, die dazu geeignet ist, das Inkontaktbringen der Pufferlösung (82) mit dem Gel (26) der Kassette durch einen seitlichen Ausschnitt (24) der Kassette zu gewährleisten, wobei eine Dichtung (70) an der vertikalen Wand (66) in der Nähe ihrer seitlichen Öffnung (68) vorgesehen ist.

9. Vorrichtung nach Anspruch 7 oder 8,
dadurch gekennzeichnet, daß die untere Küvette (38) und die obere Küvette (40) separabel sind und daß ferner eine separable Abdeckhaube (42) vorgesehen ist, die auf der oberen Küvette (40) eingesetzt werden kann.

10. Vorrichtung nach Anspruch 9,
dadurch gekennzeichnet, daß die obere Küvette (40) zwei elektrische Kontaktleitungen (112, 114) aufweist, die dazu geeignet sind, die elektrische Versorgung der beiden Elektroden (84, 86) zu gewährleisten, wenn gleichzeitig die Abdeckhaube (42) auf der oberen Küvette (40) aufgesetzt ist und diese letztgenannte auf der unteren Küvette (38) aufgesetzt ist.

11. Vorrichtung nach einem der Ansprüche 7 bis 10,
dadurch gekennzeichnet, daß die obere Küvette (40) eine Bodenwand (56) aufweist, von der eine Überlaufleitung (76) herabhängt, um es zu gestatten, die untere Küvette (38) zu füllen, wenn das Pufferlösungsniveau in der oberen Küvette in die Überlaufleitung überfließt.

12. Vorrichtung nach einem der Ansprüche 7 bis 11,
dadurch gekennzeichnet, daß sie Feststellmittel (74) aufweist, um das Festhalten der Kassette (10) in vertikaler Position zu gewährleisten.

13. Vorrichtung nach einem der Ansprüche 7 bis 12,
dadurch gekennzeichnet, daß sie ein Programmschaltwerk (108) aufweist, das zwischen den Elektroden (84, 86) und der Spannungsquelle zwischengeschaltet ist, um die Zeitdauer der Elektrophorese beliebig zu regeln.

14. Vorrichtung nach einem der Ansprüche 7 bis 13,
dadurch gekennzeichnet, daß sie ferner ein Behältnis (130) aufweist, das eine konzentrierte Pufferlösungsdosis enthält, die es gestattet, nach der Verdünnung die beiden Küvetten (38, 40) zu füllen.

## Claims

1. Device for electrophoresis comprising a one-piece cartridge (10) filled with an appropriate gel (26), characterised in that the gel is possibly coloured, and in that the said one-piece cartridge is made from a section of hollow form having two opposed open faces (20, 22) of which the one is closed by a removable comb (28) designed to form impressions in the gel (26) and the other by a detachable cover (36).

2. Device according to claim 1, characterised in that the cartridge (10) has the general shape of a rectangular parallelipiped bounded by two opposed parallel major faces (12,14) arranged near to one another and joined together by two opposed parallel minor faces (16, 18).

3. Device according to one of claims 1 and 2, characterised in that the cartridge (10) has a lateral cut-out (24) opening into the open face (20) which receives the removable comb (28), the said lateral cut-out being closed off by the comb (28) when the latter is placed on the said open face.

4. Device according to one of claims 1 to 3, characterised in that the cartridge (10) is made from a section extruded from a plastics material which is transparent to ultraviolet light.

5. Device according to one of claims 1 to 4, characterised in that the cover (36) is sealed ultrasonically to the corresponding open face (22) of the cartridge (10).

6. Device according to one of claims 1 to 5, characterised in that it furthermore includes two vessels (38, 40), each designed to contain a conducting plug (54, 82) and containing respectively two electrodes (84, 86) designed to be fed from a source of direct current, the two vessels having respective openings (52, 68) for the two open faces of the cartridge (10) with the aim of ensuring contact between the gel (26) and the corresponding plug (54, 82) of each vessel.

7. Device according to claim 6, characterised in that the two vessels comprise a lower vessel (38) and an upper vessel (40) superimposed vertically for receiving the cartridge (10) in a vertical position, one end of the cartridge dipping into the lower vessel (38) and the other end of the cartridge communicating laterally with the upper vessel (40).

8. Device according to claim 7, characterised in that the upper vessel (40) has a vertical wall (66) in which there is formed a lateral opening (68) designed to provide contact between the plug (82) and the gel (26) in the cartridge through a lateral cut-out (24) in the cartridge, a sealing gasket (70) being provided on the vertical wall (66) adjacent to its lateral opening (68).

9. Device according to one of claims 7 and 8, characterised in that the lower vessel (38) and the upper vessel (40) are separable and in that there is furthermore provided a separable cover (42) designed to be fitted onto the upper vessel (40).

10. Device according to claim 9, characterised in that the upper vessel (40) has two electric connections to contacts (112, 114) designed to provide an electric supply to two electrodes (84, 86) when simultaneously the cover (42) is fitted onto the upper vessel (40) and the latter is fitted onto the lower vessel (38).

11. Device according to one of claims 7 to 10, characterised in that the upper vessel (40) has a bottom wall (56) from which depends an overflow conduit (76) to allow the lower vessel (38) to be replenished when the level of the plug in the upper vessel reaches the overflow conduit.

12. Device according to one of claims 7 to 11, characterised in that it includes locking means (74) to ensure that the cartridge (10) is held in a vertical position.

13. Device according to one of claims 7 to 12, characterised in that it includes a programmer 108 interposed between the electrodes (84, 86) and the voltage source to regulate the period of electrophoresis at will.

14. Device according to one of claims 7 to 13, characterised in that it includes furthermore a container (130) which contains a concentrated dose of the plug which, after dilution, allows replenishment of the two vessels (38, 40).
